# EUROPEAN PATENT SPECIFICATION

(11) **EP 0 633 843 B1**
(45) Date of publication and mention of the grant of the patent: **15.01.1997**
(21) Application number: 92924966.2
(22) Date of filing: 06.11.1992
(51) Int. Cl.: B60J 3/00

(54) **MOTOR VEHICLE SUNVISOR**
SONNENBLENDE FÜR KRAFTFAHRZEUG
PARESOLEIL POUR VEHICULE

(43) Date of publication of application: 18.01.1995
(73) Proprietor: Happich France, 57150 Creutzwald (FR)
(72) Inventor: BENNSTEDT, Niklas, S-791 60 Falun (SE)
(74) Representative: Hellbom, Lars Olof
(86) International application number: SE9200769
(87) International publication number: WO9411213

(56) References cited:
- DE-A- 2 102 917
- PATENT ABSTRACTS OF JAPAN, Vol. 12, No. 332, M-738; & JP,A,63-95936 (KASAI KOGYO CO LTD), 26 April 1988 (26.04.88).

## Description

The present invention relates to a motor vehicle sun visor comprising a plate in the form of an oblong plastic body with a surface coating (See e.g. DE-A-2 102 917 or JP-A-95936/88).

For safety reasons, sun visors for modern cars comprise either a plate of a relatively soft material, such as foamed plastic, or a hollow plate of a non-foamed plastic. This imparts compressibility to the visors so that they are able to absorb a blow from a vehicle occupant in the event of a collision or under heavy braking.

In both cases, the plate is usually covered with a plastic film which serves to give the sun visor an aesthetically pleasing appearance adapted to the interior of the car. A generally employed method for applying the film to the plate comprises applying a film sheet to either side of the plate, welding the film sheets together around the edges of the plate and trimming away the film material outside of the weld line to remove surplus film.

Sun visors are manufactured in very large numbers and it is therefore important to automate the manufacturing process to as great a degree as possible in order to keep down the costs. The application of the film is however difficult to carry out entirely without manual assistance.

It is the object of the present invention to provide a sun visor comprising a plate in the form of a plastic body with, in this context, a new surface coating which can be applied in a fully automatic manufacturing process.

This is achieved in accordance with the invention by means of the surface coating being formed of a polymer layer injection moulded onto the plastic body, said layer providing final shape and surface structure of the sun visor.

In a preferred embodiment of the invention such a surface coating can be formed of a thermoelastic layer.

The sun visor according to the invention can be produced by injecting a thermoplastic into a mould cavity between two mould-halves to form the plastic body, and thereafter injection moulding a thermoplastic containing colour pigment to form a surface coating on the plastic body.

The invention will be described in greater detail with reference to embodiments illustrated in the attached drawings in which
Fig. 1 shows an exploded view of a sun visor plate consisting of two halves, and
Fig. 2 shows a cross-section through the plate in Fig. 1 with an enlargement of the circled region.

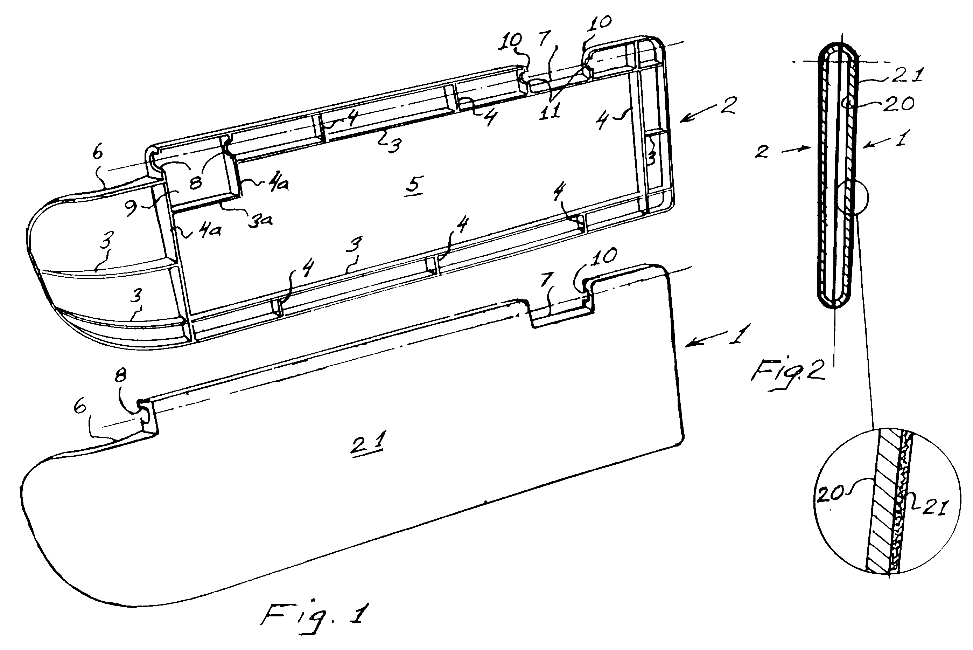

The sun visor plate shown in Fig. 1 consists of first and second plate-halves 1, 2 resp. whose opposing facing sides are mirror images. On their respective inner sides, the plate-halves 1 and 2 are provided with longitudinally and transversely extending stiffening ribs 3 and 4 resp. which form a stiffened frame around an unstiffened cavity 5. The plate-halves 1, 2 are formed with a first cut-away 6 for a main pivot pin (not shown) and a second cut-away 7 for a second pivot pin (not shown). Transversely extending ribs 4a, which present semicircular-shaped notches 8 for the main pivot pin, together with a longitudinally extending rib 3a delimit a box or pocket 9 for a main bearing with spring snap-in (not shown). Opposing wall sections 10 at the cut-away 7 present corresponding semicircular-shaped notches 11 for the second pivot pin.

In Fig. 2 a complete sun visor plate is shown in cross-section after joining the parts 1 and 2, for example by gluing or welding. In the drawing reference numeral 20 denotes a first layer of a stiff and hard plastic material such as PP which forms the backing unit. The hard layer 20 is provided with a coating of a thermoelastic material, TPE, which contains colour pigment and has a surface structure adapted to the interior of the car. The surface can be structured to resemble for example a textile surface or a leather surface. Such a sun visor can be made so that it is difficult to distinguish from a conventional sun visor made from a foamed body covered by a PVC film. The thermoelastic material "camouflages" the hard backing and imparts a soft and agreeable impression. The cavity 5 between the halves 1 and 2 provides the sun visor with necessary compressibility. The resilience of the material and thereby the compressibility of the sun visor plate is determined by the thickness of the layer 20 in the plate. Depending on the material, the thickness of the plates can vary between just under 1 mm and up to 3 mm. In a corresponding manner, the thickness of the surface coating 21 can be varied between 1 mm and 3 to 4 mm, depending on the desired softness of the coating.

The embodiment of the sun visor shown in the drawings can be manufactured by injection moulding respective halves from a thermoplastic in a mould cavity between a pair of mould-halves. After solidification of the material, the mould-half facing the outer side of the plate is separated a little from the surface of the plate so that a gap is created between the mould surface and the surface of the plate. The size of the gap corresponds to the desired thickness of the soft surface layer. Thereafter, the thermoelastic material is injected into the gap. A mould-half is hereby used whose inner surface is structured so as to impart the desired surface structure on the thermoelastic surface layer. Using this production technique a surface layer is formed which, in its entirety, is securely adhered to the surfaces 1 and 2 of the sun visor plates and which does not need to be trimmed after application.

As an alternative to the described injection moulding of two plate-halves and their subsequent joining by e.g. gluing or welding, blow moulding or gas injection can be used, whereby the sun visor plate can thus be produced in one piece. The cavity in both the injection moulded sun visor and the blow moulded sun visor can, if desired, be filled with a foamed material to increase the stiffness.

A considerable advantage with the described sun visor embodiment is that it is easy to achieve a stiff backing surface for e.g. a mirror and lighting unit simply by leaving a region of the plate without surface coating during the injection moulding of the rest of the surface coating.

The arrangement according to the invention hereby eliminates those problems which are associated with achieving an aesthetically pleasing transition between a film on a conventional film-covered plate and the frame region around a mirror and lighting unit.

## Claims

1. Motor vehicle sun visor, comprising an plate in the form of an oblong plastic body with a surface coating, characterized in that the surface coating (21) is formed of a polymer layer injection moulded onto the plastic body 1,2), said layer providing final shape and surface structure of the sun visor.

2. Sun visor according to claim 1, characterized in that the surface coating (21) consists of a thermoelastic layer.

3. Sun visor according to claim 1 or 2, characterized in that the surface coating (21) is structured to resemble a textile surface.

4. Sun visor according to claim 1 or 2, characterized in that the surface coating (21) is structured to resemble a leather surface.

5. Sun visor according to one of claims 1-4, characterized in that the plastic body (1,2) consists of a thermoplastic.

6. Sun visor according to claim 5, characterized in that the cavity in the plastic body is filled with a foamed material.

7. Sun visor according to one of claims 1-6, characterized in that the plate has, at least on one side, a surface portion lacking said surface coating and forming a supporting surface for a component fixed to the plate in the form of a lighting unit, mirror of the like.

## Patentansprüche

1. Kraftfahrzeugsonnenblende aus einer als länglicher Kunststoffkörper geformten Platte mit einer Oberflächenbeschichtung, dadurch gekennzeichnet, daß die Oberflächenbeschichtung (21) durch eine gegen den Kunststoffkörper (1, 2) spritzgegossene Polymerschicht, die der Sonnenblende die endgültige Form und Oberflächenstruktur gibt.

2. Sonnenblende nach Anspruch 1, dadurch gekennzeichnet, daß die Oberflächenbeschichtung (21) aus einer thermoelastischen Schicht besteht.

3. Sonnenblende nach Anspruch 1 oder 2, dadurch gekennzeichnet, daß die Oberflächenbeschichtung (21) eine einer Textiloberfläche ähnelnde Struktur aufweist.

4. Sonnenblende nach Anspruch 1 oder 2, dadurch gekennzeichnet, daß die Oberflächenbeschichtung (21) eine einer Lederoberfläche ähnelnde Struktur aufweist.

5. Sonnenblende nach einem der Ansprüche 1 bis 4, dadurch gekennzeichnet, daß der Kunststoffkörper (1, 2) aus einem Thermoplast besteht.

6. Sonnenblende nach Anspruch 5, dadurch gekennzeichnet, daß der Hohlraum im Kunststoffkörper mit einem Schaummaterial gefüllt ist.

7. Sonnenblende nach einem der Ansprüche 1 bis 6, dadurch gekennzeichnet, daß die Platte wenigstens auf einer Seite einen Oberflächenbereich ohne Oberflächenbeschichtung aufweist und dieser Bereich eine Aufnahmefläche für ein an der Platte befestigtes Ausstattungsteil in Form einer Beleuchtungseinheit, einen Spiegel oder dergleichen bildet.

## Revendications

1. Pare-soleil pour véhicule à moteur, comprenant une plaque sous la forme d'un corps oblong en matière plastique muni d'un revêtement superficiel, caractérisé en ce que le revêtement superficiel (21) est formé d'une couche de polymère moulée par injection sur le corps en matière plastique (1,2), ladite couche donnant au pare-soleil sa forme et sa structure superficielle définitives.

2. Pare-soleil selon la revendication 1, caractérisé en ce que le revêtement superficiel (21) est constitué par une couche de matière thermoélastique.

3. Pare-soleil selon la revendication 1 ou 2, caractérisé en ce que le revêtement superficiel (21) est structuré de manière à ressembler à une surface de textile.

4. Pare-soleil selon la revendication 1 ou 2, caractérisé en ce que le revêtement superficiel (21) est structuré de manière à ressembler à une surface de cuir.

5. Pare-soleil selon l'une quelconque des revendications 1 à 4, caractérisé en ce que le corps en matière plastique (1,2) est fait d'une matière thermoplastique.

6. Pare-soleil selon la revendication 5, caractérisé en ce que la cavité du corps en matière plastique est remplie d'une mousse.

7. Pare-soleil selon l'une quelconque des revendications 1 à 6, caractérisé en ce que la plaque présente, au moins d'un côté, une partie de sa surface qui est dépourvue dudit revêtement superficiel et constitue une surface de support pour un élément fixé à la plaque, sous la forme d'un élément d'éclairage, d'un miroir ou similaire.
